# EUROPEAN PATENT APPLICATION

(11) **EP 4 319 316 A1**
(43) Date of publication of application: **07.02.2024**
(21) Application number: 21933983.5
(22) Date of filing: 01.04.2021
(51) Int. Cl.: H04W 48/10

(54) **COMMUNICATION METHOD AND COMMUNICATION APPARATUS UNDER MULTIPLE LINKS**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/084976
(87) International publication number: WO 2022/205324

(57) **Abstract**

Provided in the present disclosure are a communication method and a communication apparatus under multiple links. The communication method may comprise: determining a first message frame, wherein the first message frame comprises: information indicating that fast initial link setup (FILS) is performed under at least one of multiple links, and the information comprises a simplified neighbor report information element used for identifying related information of the multiple links supported by an access point supporting multi-link communication; and sending the first message frame. By means of the technical solution provided in the exemplary embodiments of the present disclosure, the spectrum utilization is improved.

## Description

### TECHNICAL FIELD

The present disclosure relates to the field of wireless communication, and more particularly to a communication method and a communication apparatus with multiple links.

### BACKGROUND

A current research of the Wi-Fi technology focuses on: a bandwidth transmission of 320 MHz, and the multi-band aggregation and collaboration, etc., and it is desired to increase a rate and throughput by at least four times compared to the existing standards. Its main application scenarios are: a video transmission, an AR (Augmented Reality), a VR (Virtual Reality), etc.

The multi-band aggregation and collaboration refer to simultaneous communications among devices in frequency bands of 2.4 GHz, 5 GHz and 6 GHz. A new media access control (MAC) mechanism needs to be defined to manage the simultaneous communications among devices in the plurality of frequency bands. In addition, it is also desired that the multi-band aggregation and collaboration can support a low-latency transmission.

The current multi-band aggregation and collaboration technology will support a maximum bandwidth of 320 MHz (160 MHz + 160 MHz), and may also support 240 MHz (160 MHz + 80 MHz) and other bandwidths.

In the related art, in order to enable a station (STA) such as a terminal to fast set up an initial link with an access point (AP), a fast initial link-setup (FILS) mechanism may be used. In this mechanism, the AP may broadcast a FILS discovery (FD) frame for a fast initial link-setup.

In addition, in the current technology, the station (STA) and the access point (AP) may be multi-link devices (MLDs), that is, supporting a function of being able to perform transmission and/or reception simultaneously with the multiple links at the same moment. Therefore, in the current technology, the multiple links may exist between the STA and the AP, and a communication of the two devices with the multiple links is being studied.

However, the FILS mechanism in the related art is only suitable for a single-link communication between the station and the access point and is not suitable for a multi-link communication in the current technology, so that an enhancement is needed.

### SUMMARY

Aspects of the present disclosure will address at least the above problems and/or disadvantages. Various embodiments of the present disclosure provide following technical solutions.

According to illustrative embodiments of the present disclosure, a communication method with multiple links is provided. The communication method may be performed by an access point that supports a multi-link communication and may include: determining a first message frame, in which the first message frame includes: information indicating that a fast initial link-setup (FILS) is performed with at least one link in the multiple links, in which the information includes: a reduced neighbor report element configured to identify relevant information of the multiple links supported by the access point that supports the multi-link communication; and sending the first message frame.

According to illustrative embodiments of the present disclosure, a communication method with multiple links is provided. The communication method may be performed by a station that supports a multi-link communication and may include: receiving a first message frame, in which the first message frame includes: information indicating that a fast initial link-setup (FILS) is performed with at least one link in the multiple links, in which the information includes: a reduced neighbor report element configured to identify relevant information of the multiple links supported by an access point that supports a multi-link communication; and performing a communication operation based on the first message frame.

According to illustrative embodiments of the present disclosure, a communication apparatus with multiple links is provided. The communication apparatus may be applied to an access point that supports a multi-link communication and may include: a processing module configured to determine a first message frame, in which the first message frame includes: information indicating that a fast initial link-setup (FILS) is performed with at least one link in the multiple links, in which the information includes: a reduced neighbor report element configured to identify relevant information of the multiple links supported by the access point that supports the multi-link communication; and a transceiving module configured to send the first message frame.

According to illustrative embodiments of the present disclosure, a communication apparatus with multiple links is provided. The communication apparatus may be applied to a station that supports a multi-link communication and may include: a transceiving module configured to receive a first message frame, in which the first message frame includes: information indicating that a fast initial link-setup (FILS) is performed with at least one link in the multiple links, in which the information includes: a reduced neighbor report element configured to identify relevant information of the multiple links supported by an access point that supports a multi-link communication; and a processing module configured to perform a communication operation based on the first message frame.

According to illustrative embodiments of the present disclosure, an electronic device is provided. The electronic device includes a memory, a processor, and a computer program stored in the memory and runnable on the processor. The processor implements the method as described above when executing the computer program.

According to illustrative embodiments of the present disclosure, a computer-readable storage medium is provided. The computer-readable storage medium has stored therein a computer program that, when executed by a processor, causes the method as described above to be implemented.

The technical solutions provided by the illustrative embodiments of the present disclosure may fast set up the multi-link communication between the station and the access point, and improve spectrum utilization.

### BRIEF DESCRIPTION OF THE DRAWINGS

The above and other features of embodiments of the present disclosure will become more apparent from the following detailed descriptions of illustrative embodiments of the present disclosure made with reference to the drawings, in which:
FIG. 1 is an illustrative diagram showing a communication scenario with multiple links.
FIG. 2 is a flowchart showing a communication method with multiple links according to embodiments.
FIG. 3 is a flowchart showing another communication method with multiple links according to embodiments.
FIG. 4 is a block diagram showing a communication apparatus according to embodiments of the present disclosure.

### DETAILED DESCRIPTION

The following description made with reference to the accompanying drawings is provided to assist in a comprehensive understanding of various embodiments of the present disclosure as defined by the appended claims and their equivalents. Various embodiments of the present disclosure include various specific details, but these specific details are considered to be illustrative only. In addition, descriptions of well-known techniques, functions, and constructions may be omitted for the sake of clarity and conciseness.

Terms and words used in the present disclosure are not limited to literal meanings, but are merely used by the inventor to promote a clear and consistent understanding of the present disclosure. Accordingly, to those skilled in the art, descriptions of various embodiments of the present disclosure are provided for a purpose of illustration only and are not intended to limit the present disclosure.

It should be understood that, the singular forms like "a", "an", "the" and "said" as used herein may include the plural forms as well, unless clearly indicated in the context otherwise. It should be further understood that the word "comprising", "including" or their variants as used in the present disclosure refers to a presence of the described feature(s), integer(s), step(s), operation(s), element(s) and/or component(s), but does not exclude a presence or addition of one or more other features, integers, steps, operations, elements, components and/or groups thereof.

It will be understood that, although the terms "first", "second", and like may be used herein to describe various elements, these elements should not be limited by these terms. These terms are only used to distinguish one element from another. Accordingly, a first element discussed below may be termed a second element, without departing from the teachings of illustrative embodiments.

It should be understood that when an element is referred to as being "connected" or "coupled" to another element, it can be directly connected or coupled to another element, or an intervening element may be present. In addition, the terms "connected" or "coupled" as used herein may include wireless connections or wireless couplings. As used herein, the term "and/or" or the expression "at least one/at least one of ......" includes any and all combinations of one or more of the associated listed items.

Unless otherwise defined, all terms (including technical and scientific terms) used herein have the same meaning as commonly understood by those ordinarily skilled in the art to which the present disclosure belongs.

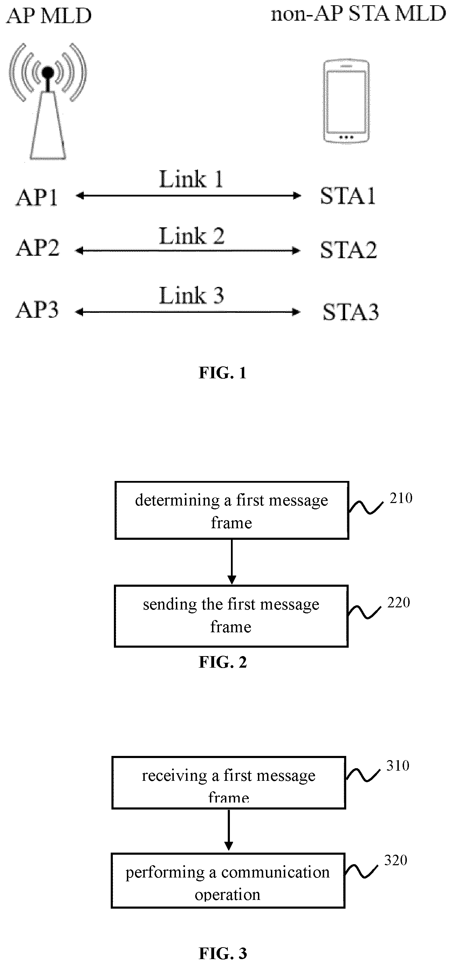

FIG. 1 is an illustrative diagram showing a communication scenario with multiple links.

In a wireless local area network, a basic service set (BSS) may consist of an AP and one or more stations (STAs) that communicate with the AP. The basic service set may be linked to a distribution system (DS) through its AP, and then accessed to another basic service set to form an extended service set (ESS).

The AP is a wireless switch used in a wireless network and is also a core of the wireless network. The AP device may be used as a wireless base station, which is a bridge mainly configured to link the wireless network and a wired network. Using this access point (AP), the wired and wireless networks can be integrated.

The AP may include software applications and/or circuits to enable other types of nodes in the wireless network to communicate with both external and internal nodes of the wireless network through the AP. In some examples, as an example, the AP may be a terminal device or a network device equipped with a wireless fidelity (Wi-Fi) chip.

As an example, the station (STA) may include, but is not limited to: a cellular phone, a smartphone, a wearable device, a computer, a personal digital assistant (PDA), a personal communication system (PCS) device, a personal information manager (PIM), a personal navigation device (PND), a global positioning system, a multimedia device, an Internet of Things (IoT) device, etc.

In illustrative embodiments of the present disclosure, the AP and the STA may support multi-link devices, and may, for example, be denoted as an AP MLD and a non-AP STA MLD respectively. For ease of description, in the following, examples in which one AP communicates with one STA with the multiple links are mainly described. However, illustrative embodiments of the present disclosure are not limited thereto.

In FIG. 1, for illustrative purposes only, the AP MLD may represent an access point that supports multi-link communication functions, and the non-AP STA MLD may represent a station that supports the multi-link communication functions. Referring to FIG. 1, the AP MLD may work with three links, such as AP1, AP2, and AP3 as shown in FIG. 1, and the non-AP STA MLD may also work with three links, such as STA1, STA2, and STA3 as shown in FIG. 1. In an example of FIG. 1, it is assumed that the AP1 communicates with the STA1 through a corresponding first link (Link 1), and similarly, the AP2 and the AP3 communicate with the STA2 and the STA3 through a second link (Link 2) and a third link (Link 3) respectively. In addition, the Link 1 to the Link 3 may be a plurality of links at different frequencies, for example, links at frequency bands of 2.4 GHz, 5 GHz, 6 GHz, etc. or several links at 2.4 GHz with the same or different bandwidths. In addition, a plurality of channels may exist with each link. However, it should be understood that the communication scenario shown in FIG. 1 is only illustrative, and the inventive concept is not limited thereto. For example, the AP MLD may be linked to a plurality of non-AP STA MLDs, or the AP may communicate with a plurality of other types of stations with each link.

The communication method and the communication apparatus provided according to embodiments of the present disclosure may be applicable to a multi-link communication environment shown in FIG. 1.

FIG. 2 is a flowchart showing a communication method with multiple links according to embodiments. The communication method shown in FIG. 2 may be performed by an access point that supports a multi-link communication, such as the AP MLD shown in FIG. 1.

Referring to FIG. 2, in step 210, a first message frame may be determined. According to embodiments, the first message frame may include information indicating that a fast initial link-setup (FILS) is performed with at least one link in the multiple links. In embodiments of the present disclosure, the multiple links may represent a plurality of links that may be used for communications between the AP MLD and the non-AP STA MLD, such as the first link (Link 1) to the third link (Link 3) as shown in FIG. 1.

In addition, in embodiments of the present disclosure, there may be many ways to determine the first message frame. For example, the first message frame may be generated according to at least one of following conditions: a network condition, a load condition, a hardware capability of a sending/receiving device, a service type, and a relevant protocol provision, and this is not specifically limited in embodiments of the present disclosure. In embodiments of the present disclosure, the first message frame may also be obtained from an external device, and this is not specifically limited in embodiments of the present disclosure. The first message frame will be described in detail later with reference to Tables 1 to 6.

In step 220, the first message frame may be sent. For example, the first message frame may be sent with an arbitrarily link in the multiple links. According to embodiments, other links may be fast activated with one link through information carried in the first message frame, thereby implementing the fast initial link-setup with the multiple links.

As descriptive embodiments only, the first message frame may be a FILS discovery frame, that is, a FD frame. The first message frame (FD frame) may be broadcast at a predetermined time interval (for example, 20 ms or 10 ms) after the access point sends a beacon frame. When receiving a broadcast first message frame (FD frame), a station may set up one or more links with the access point according to information included therein indicating the FILS. However, the present disclosure is not limited thereto, and any other types of frames are also included within the scope of the present disclosure. In the following, for ease of description, the first message frame and the information included therein are described taking the FD frame as an example. For example, the first message frame (FD frame) may have a format as shown in Table 1 below.

**Table 1. Format of first message frame (FD frame)**

| Order | Information | Notes |
|---|---|---|
| 1 | Category | |
| 2 | Public Action | |
| 3 | FILS Discovery information field | |
| 4 | Reduced Neighbor Report element | The element may optionally be present. |
| 5 | FILS Indication element | The element may optionally be present. |
| 6 | Roaming Consortium element | The element may optionally be present. |
| ...... | ...... | ...... |

Although shown in Table 1, the first message frame (FD frame) may include the category, the public action, the FILS discovery information field, the reduced neighbor report element, the FILS indication element, the roaming consortium element, and other contents. However, it will be understood that the contents shown in Table 1 are only illustrative examples and are not a limitation on the present disclosure. For example, some of the contents shown in Table 1 may be omitted from the first message frame (FD frame), or the first message frame may include more other contents. In addition, it can be understood that each content in Table 1 exists independently. These contents are illustratively listed in a same table, but it does not mean that all the contents in the table must exist at the same time according to what are shown in the table. The value of each content is not dependent on any other content value in Table 1. Therefore, those skilled in the art can understand that the value of each content in Table 1 is an independent embodiment, and these contents in Table 1 can also be freely combined together to form an embodiment.

In the following, for simplicity, the FILS discovery information field and the reduced neighbor report element (RNRE) in Table 1 used to implement a FILS mechanism with the multiple links will be described centrally.

According to embodiments of the present disclosure, information included in the first message frame indicating that the fast initial link-setup (FILS) is performed with at least one link in the multiple links may include the FILS discovery information field. The FILS discovery information field may carry information related to the FILS mechanism, for example, optionally, may include: a FILS discovery frame control subfield, a timestamp, a beacon frame interval (Beacon Interval), a FD capability, an operation class, a primary channel, etc.

In order to achieve the fast initial link-setup with the multiple links, the FILS discovery information field according to embodiments of the present disclosure may include an identification bit configured to indicate that the access point may support the multi-link communication. For example, the identification bit may be included in a FD capability subfield of the FILS discovery information field. As descriptive embodiments, the FD capability subfield may have a format as shown in Table 2 below.

**Table 2. Format of the FD capability subfield**

| B0 | B1 | B2 | B4 | B5 | B7 | B8 | B9 | B10B12 | | B13 | B15 |
|---|---|---|---|---|---|---|---|---|---|---|---|
| ESS | Privacy | BSS Operating Channel Width | | Maximum Number Of Spatial Stream | | MLD Support | Multiple BSSIDs Presence Indicator | PHY Index | | FILS Minimum Rate | |
| bits: 1 | 1 | 3 | | 3 | | 1 | 1 | 3 | | 1 | |

Referring to Table 2, an identification bit of the bit B8 may be used to indicate that the access point may support the multi-link communication. When the identification bit is carried in the FILS discovery information field of the first message frame (FD frame), a station that receives the first message frame (FD frame) may learn that the access point may support the multi-link communication by parsing the identification bit. Therefore, other contents of the first message frame (FD frame) may be further parsed to obtain information about a plurality of access points corresponding to the multiple links, thereby implementing a fast initial link-setup of the multiple links. It will be understood that the contents shown in Table 2 are only illustrative examples and are not a limitation on the present disclosure. For example, some of the contents shown in Table 2 are omitted, or more other contents may be included.

The access point broadcasts the first message frame (FD frame) so that the station may fast set up an initial link with it. In addition, since in the current technology, communication may be performed with the multiple links, and the FD frame may optionally include the reduced neighbor report element (RNRE), then the access point may broadcast its supported links in the RNRE. According to embodiments of the present disclosure, information included in the first message frame indicating that the fast initial link-setup (FILS) is performed with at least one link in the multiple links may include a reduced neighbor report element. The reduced neighbor report element may be configured to identify relevant information of the multiple links supported by the access point that supports the multi-link communication. That is, the reduced neighbor report element may include information about the plurality of access points belonging to a same AP MLD (for example, the AP1, the AP2, and the AP3 shown in FIG. 1), or may include information about the plurality of access points belonging to different AP MLDs.

As descriptive embodiments only, the reduced neighbor report element (RNRE) may have a format shown in Table 3 below.

**Table 3. Format of the reduced neighbor report element (RNRE)**

| | | |
|---|---|---|
| Element ID | Length | Neighbor AP Information fields |

Referring to Table 3, the element ID may be configured to identify the reduced neighbor report element (RNRE), the length (Length) may be configured to indicate a length of the reduced neighbor report element (RNRE), and the neighbor AP information fields may identify target beacon transmission time (TBTT) information and other information related to a group of neighbor APs.

As an example, the TBTT information may have a format as shown in Table 4 below.

**Table 4. Format of a TBTT information field**

| Neighbor AP TBTT Offset | BSSID (optional) | Short SSID (optional) | BSS parameters | 20 MHz PSD | MLD Parameters |
|---|---|---|---|---|---|
| Octets: 1 | 0 or 6 | 0 or 4 | 0 or 1 | 0 or 1 | variable |

One or more TBTT information fields may be included in the reduced neighbor report element (RNRE). In some embodiments of the present disclosure, if the multiple links included in the first message frame (FD frame) correspond to respective affiliated APs of the same AP MLD, only one TBTT information field may be included, and information of respective affiliated APs may be included in a MLD parameter subfield. In other embodiments of the present disclosure, if the multiple links included in the first message frame (FD frame) correspond to respective affiliated APs of the different AP MLDs, a plurality of TBTT information fields may be included, and the MLD parameter subfields of each TBTT information field may include information about respective affiliated APs belonging to corresponding AP MLDs.

It will be understood that the contents shown in Table 4 are only illustrative examples and are not a limitation on the present disclosure. For example, some of the contents shown in Table 4 may be omitted, or more other contents may be included. In addition, it can be understood that each content in Table 4 exists independently. These contents are illustratively listed in a same table, but it does not mean that all the contents in the table must exist at the same time according to what are shown in the table. The value of each content is not dependent on any other content value in Table 4. Therefore, those skilled in the art can understand that the value of each content in Table 4 is an independent embodiment; and these contents in Table 4 can also be freely combined together to form an embodiment.

In Table 4, a plurality of pieces of access point information of the access point (AP MLD) that supports the multi-link communication may be carried in the MLD parameter subfield. As descriptive embodiments, the MLD parameter subfield may have a format as shown in Table 5 below.

**Table 5. Format of the MLD parameter subfield**

| | | | | |
|---|---|---|---|---|
| MLD ID | Link ID 1 | Link ID 2 | Link ID 3 | ...... |

Referring to Table 5, the MLD parameter subfield may include a multi-link device identifier (MLD ID) and at least one link identifier (the Link ID 1 to the Link ID 3).

In other words, according to embodiments of the present disclosure, the reduced neighbor report element may include the multi-link device identifier (MLD ID), which may be configured to identify an address of the access point (AP MLD) that supports the multi-link communication. The multi-link device identifier (MLD ID) may be a unique identifier of the AP MLD, for example, a MLD MAC address. In addition, the reduced neighbor report element may further include: a plurality of link identifiers, which may be respectively configured to identify the multiple links supported by the access point (AP MLD) that supports the multi-link communication. For example, the link identifiers Link ID 1 to Link ID 3 in Table 5 identify communication links that the AP MLD may support and are uniquely present for the AP MLD.

Although only one multi-link device identifier (MLD ID) and its corresponding link identifier (the Link ID 1 to the Link ID 3) are shown in Table 5, the present disclosure is not limited thereto, and other multi-link device identifiers (for example, may be represented by MLD ID2) and its corresponding link identifiers (for example, may be represented by Link ID 21, Link ID 22, etc.) may further be included. In addition, the three link identifiers Link ID 1 to Link ID 3 shown in Table 5 are only illustrative, and the present disclosure is not limited thereto and more or less link identifiers may be included.

In addition, the MLD parameter subfield in the reduced neighbor report element may further include a plurality of offset time identifiers. Each of the offset time identifiers may be configured to identify a time offset (TBTT offset) of a target beacon transmission time (TBTT) beacon frame sent by the access point with a corresponding link. In this case, the MLD parameter subfield shown in Table 5 may be changed to a format shown in Table 6 below.

**Table 6. Format of the MLD parameter subfield**

| | | | | | | | |
|---|---|---|---|---|---|---|---|
| MLD ID | Link ID 1 | TBTT offset1 | Link ID 2 | TBTT offset2 | Link ID 3 | TBTT offsets | ...... |

As the station may receive the reduced neighbor report element (RNRE) with one link, the AP MLD may include the plurality of APs, and time points at which individual APs send the beacon frames may be or may not be the same, it is necessary to increase the offset time identifiers (TBTT offsets) to indicate offset time that sends the beacon frames with each link. It will be understood that the three offset time identifiers (the TBTT offset1 to the TBTT offsets) shown in Table 6 are only illustrative, and the present disclosure is not limited thereto and more or less offset time identifiers may be included.

In addition, the MLD parameter subfield in the reduced neighbor report element may further include contents in addition to Table 5 and Table 6, for example, a change sequence. The change sequence may be used jointly by the multiple links. For example, its value will change when a key update occurs in the beacon frame of the access point with an arbitrarily link; or a plurality of change sequences may exist separately corresponding to the multiple links (such as the Link ID 1 to the Link ID 3). For example, when a key update occurs in the beacon frame of the access point with a corresponding link, a value of a corresponding change sequence will change.

The communication method according to embodiments of the present disclosure include information about the multiple links by defining the FILS discovery information field and the reduced neighbor report element (RNRE) of the first message frame (FD frame), so that the AP MLD and the non-AP STA MLD may fast set up the initial access and perform multiple link-setup.

FIG. 3 is a flowchart showing another communication method with multiple links according to embodiments. The communication method shown in FIG. 3 may be applied to a station that supports the multiple links (non-AP STA MLD as shown in FIG. 1).

Referring to FIG. 3, in step 310, a first message frame may be received. The first message frame may include: information indicating that a fast initial link-setup (FILS) is performed with at least one link in the multiple links. The information may include: a reduced neighbor report element configured to identify relevant information of the multiple links supported by an access point that supports a multi-link communication. For example, the first message frame may be received with an arbitrarily link of the multiple links supported by the non-AP STA MLD.

According to embodiments of the present disclosure, the reduced neighbor report element may include: a multi-link device identifier, configured to identify an address of the access point that supports the multi-link communication.

According to embodiments of the present disclosure, the reduced neighbor report element may further include: a plurality of link identifiers respectively configured to identify the multiple links supported by the access point that supports the multi-link communication.

According to embodiments of the present disclosure, the reduced neighbor report element may further include a plurality of offset time identifiers. Each of the offset time identifiers may be configured to identify a time offset of a target beacon transmission time (TBTT) beacon frame sent by the access point with a corresponding link.

According to embodiments of the present disclosure, the information in the first message frame indicating that the fast initial link-setup (FILS) is performed with at least one link in the multiple links may further include a FILS discovery information field. The FILS discovery information field may include an identification bit configured to indicate the access point that supports the multi-link communication.

The first message frame, the reduced neighbor report element, and the FILS discovery information field involved in the step 310 may be similar to the embodiments described with reference to Tables 1 to 6, and repeated descriptions are omitted here for simplicity.

In step 320, a communication operation is performed based on the first message frame. For example, after receiving a message frame (for example, a FD frame), the station may fast activate a corresponding link according to information of at least one access point carried in the FD frame to implement the fast initial link-setup with the AP MLD via at least one link in the multiple links.

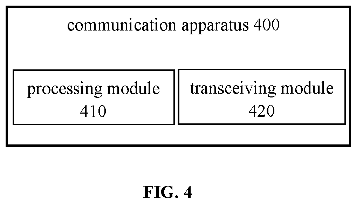

FIG. 4 is a block diagram showing a communication apparatus according to embodiments of the present disclosure.

Referring to FIG. 4, the communication apparatus 400 may include a processing module 410 and a transceiving module 420. The communication apparatus shown in FIG. 4 may be applied to an access point (AP MLD) that supports a multi-link communication or a station (non-AP STA MLD) that supports a multi-link communication.

When the communication apparatus shown in FIG. 4 is applied to the AP MLD, the processing module 410 may be configured to: determine a first message frame. The first message frame includes: information indicating that a fast initial link-setup (FILS) is performed with at least one link in the multiple links. The information includes: a reduced neighbor report element configured to identify relevant information of the multiple links supported by the access point that supports the multi-link communication. The transceiving module 420 may be configured to send the first message frame. In this case, the communication apparatus 400 may perform the communication method described with reference to FIG. 2, and repeated descriptions are omitted here for simplicity. The first message frame, the reduced neighbor report element, and the FILS discovery information field described with reference to Tables 1 to 6 may be applied here, and repeated descriptions are omitted here for simplicity.

When the communication apparatus shown in FIG. 4 is applied to the non-AP STA MLD, the transceiving module 420 may be configured to receive a first message frame. The first message frame includes: information indicating that a fast initial link-setup (FILS) is performed with at least one link in the multiple links. The information includes: a reduced neighbor report element configured to identify relevant information of the multiple links supported by an access point that supports a multi-link communication. The processing module 410 may be configured to perform a communication operation based on the first message frame. In this case, the communication apparatus 400 may perform the communication method described with reference to FIG. 3, and repeated descriptions are omitted here for simplicity. The first message frame, the reduced neighbor report element, and the FILS discovery information field described with reference to Tables 1 to 6 may be applied here, and repeated descriptions are omitted here for simplicity.

In addition, the communication apparatus 400 shown in FIG. 4 is only illustrative, and embodiments of the present disclosure are not limited thereto. For example, the communication apparatus 400 may also include other modules, such as a memory module and the like. In addition, individual modules in the communication apparatus 400 may be combined into more complex modules, or may be divided into more separate modules.

The communication method and communication apparatus according to embodiments of the present disclosure may fast set up the multi-link communication between the station and the access point, and improve the utilization of spectrums.

Based on the same principles as the methods provided by embodiments of the present disclosure, embodiments of the present disclosure also provide an electronic device, which includes a processor and a memory. The memory has stored therein machine-readable instructions (also may be referred to as "computer programs"), and the processor is configured to execute the machine-readable instructions to implement the methods described with reference to FIG. 2 and FIG.3.

Embodiments of the present disclosure also provide a computer-readable storage medium having stored therein a computer program that, when executed by a processor, causes the method described with reference to FIG. 2 and FIG. 3 to be implemented.

In illustrative embodiments, the processor may be various illustrative logical blocks, modules and circuits for implementing or executing the contents described in the present disclosure, such as a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. The processor may also be a combination that implements computing functions, including such as a combination of one or more microprocessors, a combination of the DSP and the microprocessor, etc.

In illustrative embodiments, the memory may be, for example, a read only memory (ROM), a random access memory (RAM), an electrically erasable programmable read only memory (EEPROM), a compact disc read only memory (CD-ROM) or other optical storages, optical disc storages (including a compressed optical disc, a laser disc, an optical disc, a digital versatile disc, a Blu-ray disc, etc.), magnetic disk storage media or other magnetic storage devices, or any other media that may be configured to carry or store program codes in a form of instructions or data structures and may be accessed by a computer, but is not limited thereto.

It should be understood that although various steps in the flowchart of the accompanying drawings are shown in sequence as indicated by arrows, these steps are not necessarily performed in the sequence indicated by the arrows. Unless explicitly stated in the present disclosure, the execution of these steps is not strictly limited in the sequence and may be executed in other sequences. In addition, at least some of the steps in the flowchart of the accompanying drawings may include a plurality of sub-steps or a plurality of stages. These sub-steps or stages are not necessarily executed at the same time, but may be executed at different times, and are also not necessarily to be performed sequentially, but may be performed in turn or alternately with at least part of other steps or sub-steps or stages of the other steps.

While the present disclosure has been shown and described with reference to some embodiments thereof, those skilled in the art will understand that various changes may be made in forms and details without departing from the scope of the present disclosure. Therefore, the scope of the present disclosure should not be limited to embodiments, but should be defined by the appended claims and their equivalents.

## Claims

1. A communication method with multiple links, performed by an access point that supports a multi-link communication, and comprising:
determining a first message frame, wherein the first message frame comprises: information indicating that a fast initial link-setup (FILS) is performed with at least one link in the multiple links, wherein the information comprises: a reduced neighbor report element (RNRE) configured to identify relevant information of the multiple links supported by the access point that supports the multi-link communication; and
sending the first message frame.

2. The communication method according to claim 1, wherein the reduced neighbor report element (RNRE) comprises: a multi-link device identifier, configured to identify an address of the access point that supports the multi-link communication.

3. The communication method according to claim 2, wherein the reduced neighbor report element (RNRE) further comprises: a plurality of link identifiers respectively configured to identify the multiple links supported by the access point that supports the multi-link communication.

4. The communication method according to claim 2 or 3, wherein the reduced neighbor report element (RNRE) further comprises: a plurality of offset time identifiers,
wherein each of the offset time identifiers is configured to identify a time offset of a target beacon transmission time (TBTT) beacon frame sent by the access point with a corresponding link.

5. The communication method according to any one of claims 1 to 4, wherein the information further comprises: a FILS discovery information field,
wherein the FILS discovery information field may comprise an identification bit configured to indicate that the access point may support the multi-link communication.

6. A communication method with multiple links, performed by a station that supports the multiple links, and comprising:
receiving a first message frame, wherein the first message frame comprises: information indicating that a fast initial link-setup (FILS) is performed with at least one link in the multiple links, wherein the information comprises: a reduced neighbor report element (RNRE) configured to identify relevant information of the multiple links supported by an access point that supports a multi-link communication; and
performing a communication operation based on the first message frame.

7. The communication method according to claim 6, wherein the reduced neighbor report element (RNRE) comprises: a multi-link device identifier, configured to identify an address of the access point that supports the multi-link communication.

8. The communication method according to claim 7, wherein the reduced neighbor report element (RNRE) further comprises: a plurality of link identifiers respectively configured to identify the multiple links supported by the access point that supports the multi-link communication.

9. The communication method according to claim 7 or 8, wherein the reduced neighbor report element (RNRE) further comprises: a plurality of offset time identifiers,
wherein each of the offset time identifiers is configured to identify a time offset of a target beacon transmission time (TBTT) beacon frame sent by the access point with a corresponding link.

10. The communication method according to any one of claims 6 to 9, wherein the information further comprises: a FILS discovery information field,
wherein the FILS discovery information field may comprise an identification bit configured to indicate the access point that supports the multi-link communication.

11. A communication apparatus with multiple links, applied to an access point that supports a multi-link communication, and comprising:
a processing module configured to determine a first message frame, wherein the first message frame comprises: information indicating that a fast initial link-setup (FILS) is performed with at least one link in the multiple links, wherein the information comprises: a reduced neighbor report element (RNRE) configured to identify relevant information of the multiple links supported by the access point that supports the multi-link communication; and
a transceiving module configured to send the first message frame.

12. A communication apparatus with multiple links, applied to a station that supports the multiple links, and comprising:
a transceiving module configured to receive a first message frame, wherein the first message frame comprises: information indicating that a fast initial link-setup (FILS) is performed with at least one link in the multiple links, wherein the information comprises: a reduced neighbor report element (RNRE) configured to identify relevant information of the multiple links supported by an access point that supports a multi-link communication; and
a processing module configured to perform a communication operation based on the first message frame.

13. An electronic device, comprising a memory, a processor, and a computer program stored in the memory and runnable on the processor, wherein the processor implements the method according to any one of claims 1 to 5 or according to any one of claims 6 to 10 when executing the computer program.

14. A computer-readable storage medium having stored therein a computer program that, when executed by a processor, causes the method according to any one of claims 1 to 5 or according to any one of claims 6 to 10 to be implemented.
